# EUROPEAN PATENT APPLICATION

(11) **EP 4 755 794 A1**
(43) Date of publication of application: **10.06.2026**
(21) Application number: 25221121.4
(22) Date of filing: 05.12.2025
(51) Int. Cl.: B64C 9/22, B64C 9/02

(54) **HIGH-LIFT SYSTEM AND METHOD FOR AIRCRAFT**

(30) Priority: 06.12.2024 US 202463728776 P
(71) Applicant: Bombardier Inc., Dorval QC H4S1Y9 (CA)
(72) Inventor: BONDARCHUK, Andrew, Quebec, K0B 1R0 (CA); GALLIEN, Daniel, Quebec, H7G 4K8 (CA)
(74) Representative: HGF

(57) **Abstract**

High-lift systems (300, 1300) for aircraft (100), and associated methods are provided. A high-lift system includes a movable high-lift device (20A), an inboard track (33) to guide an inboard portion (46) of the high-lift device, and an outboard track (34) to guide the outboard portion (48) of the high-lift device. An actuator (40) drives the high-lift device between the retracted position and the deployed position. The actuator is disposed inboard of the inboard track. An inboard bell crank (42) connects the actuator to the inboard portion of the high-lift device. An outboard bell crank (44) connects the actuator to the outboard portion of the high-lift device. A connecting rod (58, 62) connects the inboard bell crank to the outboard bell crank so that the outboard bell crank is drivingly connecting the actuator to the outboard portion of the high-lift device via the connecting rod and the inboard bell crank.

## Description

### TECHNICAL FIELD

The disclosure relates generally to aircraft, and more particularly to actuating high-lift devices of aircraft.

### BACKGROUND

High-lift devices are typically used to adjust an amount of lift that is generated by a wing of a fixed-wing aircraft. High-lift devices are usually used to increase lift during take-off and landing phases of flight. Actuation mechanisms for high-lift devices can be bulky and occupy a significant amount of space inside the wing of an aircraft. Some actuation mechanisms may not fit inside aircraft wings that have relatively small cross-sectional thicknesses. Improvement is desirable.

### SUMMARY

In one aspect, the disclosure describes a high-lift system for a wing of an aircraft. The high-lift system comprises:
a high-lift device movable between a retracted position and a deployed position, the high-lift device having an inboard portion and an outboard portion, the inboard portion being inboard of the outboard portion relative to a centerline of the aircraft;
an inboard track configured to guide a movement of the inboard portion of the high-lift device;
an outboard track configured to guide a movement of the outboard portion of the high-lift device, the inboard track being disposed inboard of the outboard track;
an actuator drivingly connected to the high-lift device to drive the high-lift device between the retracted position and the deployed position, the actuator being disposed either inboard of the inboard track or outboard of the outboard track;
an inboard bell crank drivingly connecting the actuator to the inboard portion of the high-lift device;
an outboard bell crank drivingly connecting the actuator to the outboard portion of the high-lift device; and
a connecting rod drivingly connecting the inboard bell crank to the outboard bell crank so that:
   when the actuator is disposed inboard of the inboard track, the outboard bell crank is drivingly connecting the actuator to the outboard portion of the high-lift device via the connecting rod and the inboard bell crank; and
   when the actuator is disposed outboard of the outboard track, the inboard bell crank is drivingly connecting the actuator to the inboard portion of the high-lift device via the connecting rod and the outboard bell crank.

The actuator may be disposed outboard of the outboard track.

The actuator may be disposed inboard of the inboard track.

The connecting rod may be a first connecting rod that is part of a linkage between the inboard bell crank and the outboard bell crank. The linkage may include a second connecting rod and an idler interconnecting the first connecting rod with the second connecting rod.

The high-lift device may be a leading edge slat.

The actuator may be disposed inboard of the inboard track. The inboard bell crank may be configured to amplify a driving movement of the actuator.

The actuator may be disposed outboard of the outboard track. The outboard bell crank may be configured to amplify a driving movement of the actuator.

The actuator may be operable to generate a linear driving movement. An orientation of the linear driving movement may be: perpendicular to an actuation direction of the high-lift device; or closer to being perpendicular to the actuation direction of the high-lift device than to being parallel to the actuation direction of the high-lift device.

The actuator may be disposed inboard of the inboard track. The inboard bell crank may be configured to redirect the linear driving movement of the actuator toward the actuation direction of the high-lift device.

The actuator may be disposed outboard of the outboard track. The outboard bell crank may be configured to redirect the linear driving movement of the actuator toward the actuation direction of the high-lift device.

The actuator may be disposed inboard of the inboard track. The outboard bell crank may be configured to amplify an actuation movement of the connecting rod.

The actuator may be disposed outboard of the outboard track. The inboard bell crank may be configured to amplify an actuation movement of the connecting rod.

The high-lift system may be devoid of another actuator drivingly connected to the high-lift device to drive the high-lift device between the retracted position and the deployed position.

Embodiments may include combinations of the above features.

In another aspect, the disclosure describes an aircraft including the high-lift system.

In another aspect, the disclosure describes a wing of a fixed-wing aircraft. The wing comprises:
a structure;
a skin mounted to the structure and defining an internal cavity of the wing;
a high-lift device movably mounted to the structure and being deployable to increase an amount of lift produced by the wing, the high-lift device having an inboard portion and an outboard portion relative to a centerline of the fixed-wing aircraft;
an inboard track configured to guide the inboard portion of the high-lift device during a deployment of the high-lift device;
an outboard track configured to guide the outboard portion of the high-lift device during the deployment of the high-lift device;
an actuator drivingly connected to the high-lift device to drive the deployment of the high-lift device, the actuator being disposed inside the internal cavity of the wing;
an inboard bell crank drivingly connecting the actuator to the inboard portion of the high-lift device;
an outboard bell crank drivingly connecting the actuator to the outboard portion of the high-lift device; and
a linkage drivingly connecting the inboard bell crank to the outboard bell crank, the linkage including a first connecting rod, a second connecting rod and an idler interconnecting the first connecting rod with the second connecting rod.

The inboard track, the outboard track, the first connecting rod and the second connecting rod may be disposed inside the internal cavity of the wing.

The high-lift device may be an outboard high-lift device. The wing may include an inboard high-lift device movably mounted to the structure and being deployable to increase the amount of lift produced by the wing. The outboard high-lift device may be disposed outboard of the inboard high-lift device along the wing.

In some embodiments, at least part of the actuator may be disposed inboard of the inboard track.

In some embodiments, at least part of the actuator may be disposed outboard of the outboard track.

The high-lift device may be a leading edge slat.

The inboard track and the outboard track may be movable relative to the structure during the deployment of the high-lift device.

The high-lift device may be a leading edge slat. The actuator may be operable to generate a linear driving movement. An orientation of the linear driving movement may be: perpendicular to an actuation direction of the leading edge slat; or closer to being perpendicular to the actuation direction of the leading edge slat than to being parallel to the actuation direction of the leading edge slat. The actuator may be disposed inboard of the inboard track. The inboard bell crank may be configured to amplify the linear driving movement of the actuator. The outboard bell crank may be configured to amplify a driving movement of the second connecting rod.

Embodiments may include combinations of the above features.

In a further aspect, the disclosure describes a method of deploying a high-lift device of a wing of an aircraft. The method comprises:
generating a driving movement along a driving direction that is different from a deployment direction of the high-lift device;
converting the driving movement into a first deployment movement for a first portion of the high-lift device;
applying the first deployment movement to the first portion of the high-lift device;
transmitting the driving movement toward a second portion of the high-lift device via a linkage including a first connecting rod, a second connecting rod and an idler interconnecting the first connecting rod with the second connecting rod;
converting movement from the linkage into a second deployment movement for a second portion of the high-lift device; and
applying the second deployment movement to the second portion of the high-lift device.

The high-lift device may be a leading edge slat. The driving movement may be generated by a linear actuator disposed inside an internal cavity of the wing.

Embodiments may include combinations of the above features.

Further details of these and other aspects of the subject matter of this application will be apparent from the detailed description included below and the drawings.

### DESCRIPTION OF THE DRAWINGS

Reference is now made to the accompanying drawings, in which:
FIG. 1 is a top plan view of an exemplary aircraft having a high-lift system as described herein;
FIG. 2 is a perspective cross-sectional view of part of a wing of the aircraft of FIG. 1 taken along line 2-2 in FIG. 1;
FIG. 3A is a schematic top plan view of an exemplary high-lift system of the aircraft of FIG. 1;
FIG. 3B is a schematic top plan view of another exemplary high-lift system of the aircraft of FIG. 1;
FIG. 4A is an enlarged top plan view of part of the high-lift system of FIG. 3A showing an outboard bell crank;
FIG. 4B is an enlarged perspective view of part of the high-lift system of FIG. 3A showing the outboard bell crank;
FIG. 4C is an enlarged top plan view of part of the high-lift system of FIG. 3A showing an exemplary idler;
FIG. 4D is an enlarged top plan view of another exemplary idler;
FIGS. 5A-5C are top plan views of part of the high-lift system of FIG. 3A showing a leading edge slat in a retracted position, in an intermediate position and in a deployed position respectively; and
FIG. 6 is a flow diagram of a method of deploying a high-lift device of a wing of an aircraft.

### DETAILED DESCRIPTION

This disclosure relates to systems and methods for actuating high-lift devices or other movable flight control surfaces of aircraft. In some embodiments, the systems described herein may be relatively compact so as to fit inside wings that have relatively small thicknesses (i.e., thin cross-sectional profiles). For example, the systems and methods described herein may facilitate the installation of deployable leading edge slats on relatively thin wings that typically would not include leading edge slats. In various embodiments, the systems and methods described herein may also promote relatively efficient packaging inside the aircraft wing.

Aspects of various embodiments are described through reference to the drawings. The term "connected" may include both direct connection (in which two elements that are connected to each other contact each other) and indirect connection (in which at least one additional element is located between the two elements). The term "substantially" as used herein may be applied to modify any quantitative representation which could permissibly vary without resulting in a change in the basic function to which it is related.

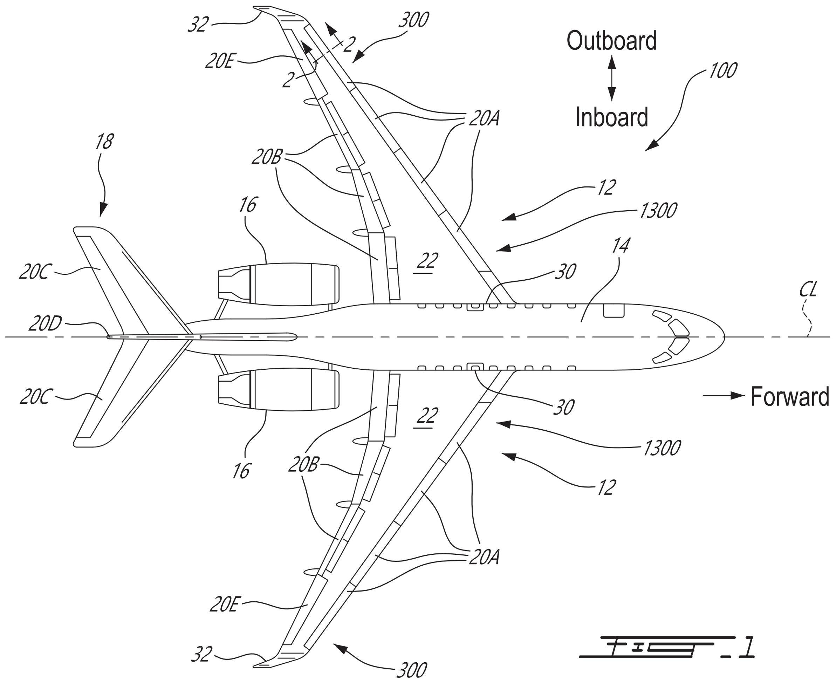

FIG. 1 is a top plan view of an exemplary aircraft 100 including high-lift system 300 and/or high-lift system 1300 as described herein. Aircraft 100 may be any type of manned or unmanned aircraft (e.g., drone) such as corporate, private, commercial and passenger aircraft. In various embodiments, aircraft 100 may be a (e.g., ultra-long range) business jet or a blended-wing-body (BWB) aircraft for example. Aircraft 100 may be a fixed-wing aircraft.

Aircraft 100 may include one or more wings 12, fuselage 14, one or more engines 16 and empennage 18. One or more of engines 16 for propelling aircraft 100 may be mounted to fuselage 14. Alternatively, or in addition, one or more of engines 16 may be mounted to wings 12. **In** some embodiments, wings 12 may have a relatively small thickness and may each include one or more high-lift systems 300, 1300. Wings 12 may each include wing skin 22 defining an outer surface of wings 12 that interact with the ambient air outside of aircraft 100 during flight. Wing skin 22 may include an upper wing skin defining an upper outer surface of wing 12, and a lower wing skin defining a lower outer surface of wing 12. The term "thickness" used herein in reference to wing 12 is the distance between the upper and lower surfaces of wing 12, which may have an airfoil-shaped cross-sectional profile. In some embodiments, system 300, 1300 may be suitable for installation on a relatively thin wing, for example, having an average thickness that is between 5% and 12% of a chord length of the wing. In some embodiments, system 300, 1300 may be suitable for installation on thicker wings as well.

Fuselage 14 may have a centerline CL which extends centrally and axially along fuselage 14. Centerline CL may lie in a vertical plane of symmetry between a port side of aircraft 100 and a starboard side of aircraft 100. Aircraft 100 may include primary and/or secondary flight control surfaces. For example, aircraft 100 may include high-lift devices such as leading edge slats 20A and/or trailing edge flaps 20B movably mounted to wings 12 for increasing the amount of lift produced by wings 12 during some phases of flight. For example, leading edge slats 20A and/or trailing edge flaps 20B may be deployed (i.e., extended) during landing, take-off and/or during any other situations where increased lift is required. High-lift devices 20A, 20B may be located at any suitable spanwise locations along wings 12 and may define at least a portion of the wings 12. In some embodiments, each wing 12 may include one or more high-lift devices 20A, 20B. Aircraft 100 may include primary flight control surfaces such as elevators 20C, rudder 20D, empennage 18 (including vertical and horizontal stabilizers) and ailerons 20E configured to respectively control the pitch, yaw and roll of aircraft 100 during flight.

References made herein to "inboard" and "outboard" are made to indicate relative positioning along the span of wings 12 in relation to centerline CL of fuselage 14, as indicated in FIG. 1. "Inboard" is understood to be closer to and/or toward centerline CL and "outboard" is understood to be farther and/or away from centerline CL. For example, root 30 of wing 12 is disposed inboard of tip 32 of wing 12.

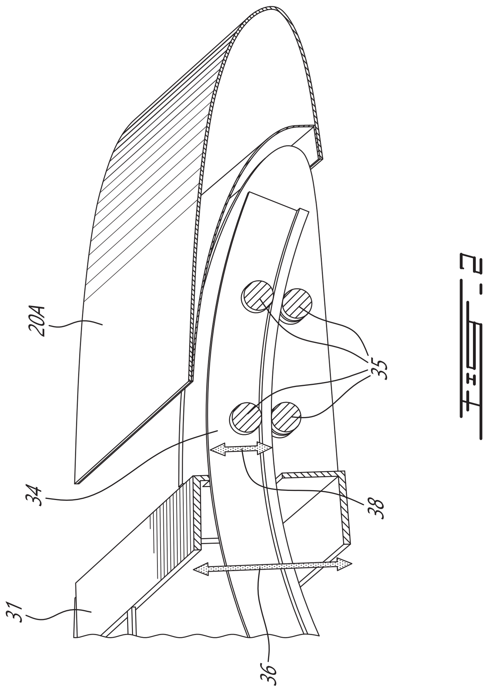

FIG. 2 is a perspective cross-sectional view of part of a port side wing 12 (referred hereinafter as "wing 12") of the aircraft 100 taken along line 2-2 in FIG. 1. In some embodiments of aircraft 100, the starboard side wing 12 may have a similar or identical (i.e., symmetrical) construction. Even though the description of high-lift system 300 is presented herein in relation to leading edge slat 20A (referred hereinafter as "slat 20A"), high-lift system 300 may instead include trailing edge flap 20B. In some embodiments, aspects of high-lift system 300 may be used for actuating other types of flight control surfaces of aircraft 100.

Wing 12 may include internal structure 31 for supporting wing skin 22 and other components of wing 12. Components of high-lift system 300 may be connected and supported by structure 31. Structure 31 may be disposed inside an internal cavity defined by wing skin 22. Structure 31 may define a skeleton or frame of wing 12 carrying flight loads during flight, and the weight of wing 12 when aircraft 100 is on the ground. In some embodiments, structure 31 may include one or more structural members such as a wing spar running substantially spanwise, ribs attached to the wing spar and defining a skeletal shape of wing 12, and stringers extending spanwise along wing 12.

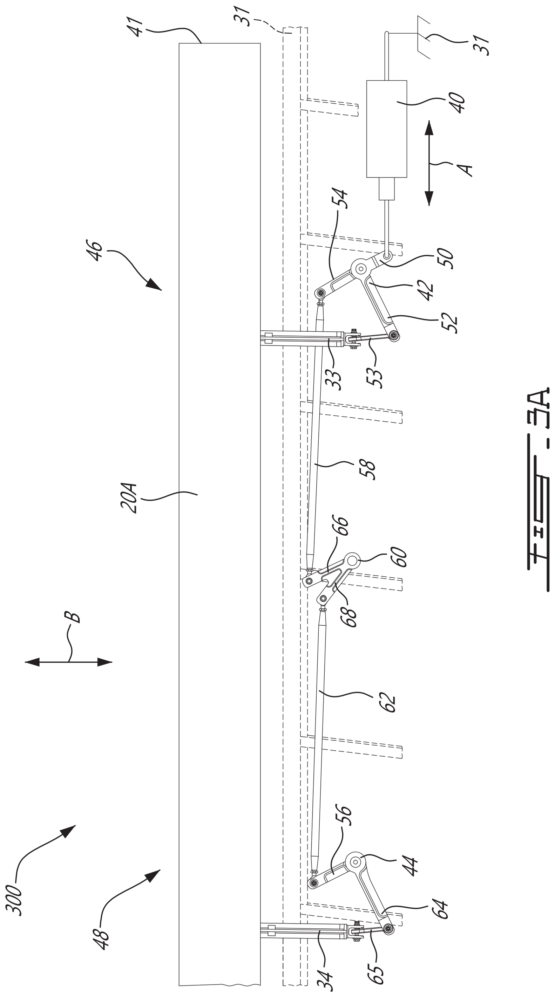

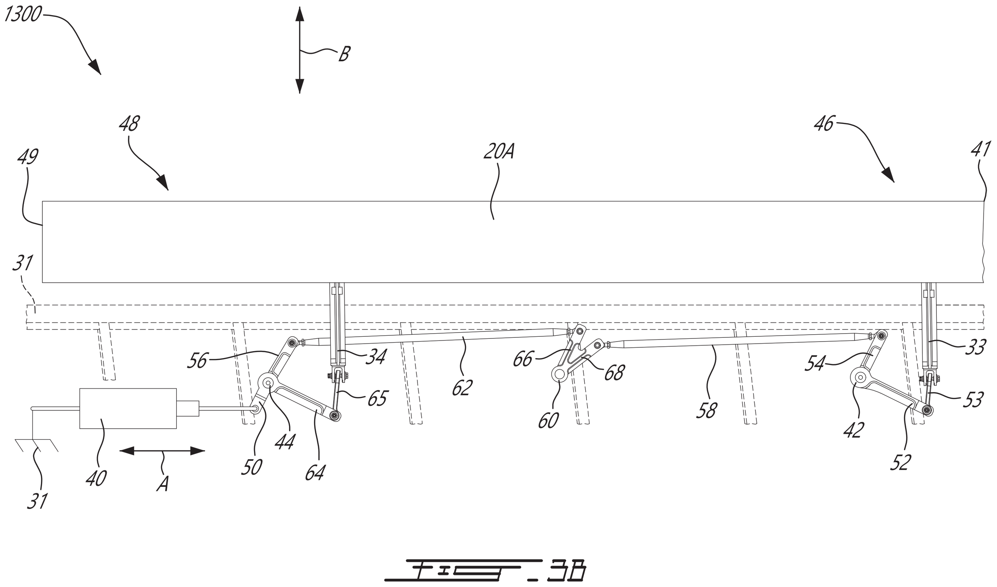

Slat 20A may be movably mounted to structure 31 and may define a portion (e.g., part of a span) of a leading edge of wing 12. Slat 20A may be deployable generally forwardly and downwardly to increase the lift produced by wing 12. The trajectory of slat 20A during deployment and retraction may be defined and guided by one or more tracks such as inboard track 33 (shown in FIG. 3) and outboard track 34. Inboard track 33 may have a similar or identical construction as outboard track 34. As illustrated in FIG. 2, outboard track 34 may be deployable together with slat 20A. Outboard track 34 may be movably engaged with one or more rollers 35 that are supported by structure 31 and that may be stationary relative to structure 31 as outboard track 34 is deployed and retracted relative to structure 31. In some embodiments, rollers 35 may be arranged to have one or more rollers 35 on opposite (vertical and/or lateral) sides of outboard track 34. For example, rollers 35 may include upper rollers 35 engaged with an upper side of outboard track 34, and lower rollers 35 engaged with a lower side of outboard track 34.

Outboard track 34 may have height 38 which may be smaller than thickness 36 of a spar of structure 31. Outboard track 34 may extend through an aperture defined in the spar of structure 31. Outboard track 34 may be curved or straight depending on the desired deployment movement of slat 20A. In various embodiments, the shape and configuration of outboard track 34 may be identical as or different from the shape and configuration of inboard track 33. For example, in some embodiments, inboard portion 46 and outboard portion 48 of slat 20A may be deployed and retracted by the same rate in unison and follow the same trajectory. However, in some embodiments, inboard portion 46 and outboard portion 48 of slat 20A may be deployed and retracted at different rates, by different amounts, and/or follow different trajectories.

In some embodiments of system 300, outboard track 34 and inboard track 33 may instead be fixedly secured to structure 31 to be stationary relative to structure 31, and rollers 35 may be mounted to two movable carriages that are deployable together with slat 20A and movable along trajectories defined by their respective stationary inboard track 33 and outboard track 34. In some embodiments, slat 20A may have three or more movable carriages that move along trajectories defined by three or more respective tracks located along the span of slat 20A.

FIG. 3A is a schematic top plan view of an exemplary high-lift system 300 (referred herein as "system 300") of aircraft 100. System 300 may include slat 20A that is generally deployable and retractable along actuation (i.e., deployment and/or retraction) direction B when viewed from above. In some embodiments, actuation direction B may be substantially parallel to centerline CL of aircraft 100 but this may not necessarily the case. In some embodiments, actuation direction B may be oriented closer to centerline CL than to a lateral axis transverse to centerline CL.

Slat 20A may have inboard portion 46 and outboard portion 48 where inboard portion 46 is closer to centerline CL of aircraft 100 than is outboard portion 48. Inboard track 33 may guide the movement of inboard portion 46 of slat 20A during the deployment and retraction of slat 20A. Outboard track 34 may guide the movement of outboard portion 48 of slat 20A during the deployment and retraction of slat 20A. Inboard track 33 may be disposed inboard of outboard track 34 relative to centerline CL.

System 300 may include one or more actuators 40 (referred hereinafter in the singular) to drive the movement of slat 20A. In some embodiments, actuator 40 may be the sole actuator for actuating slat 20A. In other words, system 300 may be devoid of any additional actuators for driving slat 20A. Actuator 40 may be drivingly connected to slat 20A to drive slat 20A between the retracted position and the deployed position. In some embodiments, actuator 40 may include an electric motor and the (e.g., linear) driving movement may be generated by a ball screw or a rack and pinion drive drivingly connected to the electric motor for example. In some embodiments, actuator 40 may include a hydraulic cylinder and the (e.g., linear) driving movement may be generated by a piston of the hydraulic cylinder. Actuator 40 may generate a linear driving movement along driving direction A, which may be different from (e.g., non-parallel, transverse to) actuation direction B of slat 20A.

Actuator 40 may be entirely disposed inside of the internal cavity of wing 12 defined by skin 22 of wing 12. In some embodiments, actuator 40 may be entirely disposed inboard of inboard track 33. In some embodiments, at least part of actuator 40 may be disposed inboard of inboard track 33. In some embodiments, at least part of actuator 40 may be disposed outboard of inboard end 41 of slat 20A. In some embodiments, at least part of actuator 40 may be disposed inboard of inboard end 41 of slat 20A. The location of actuator 40 inboard of inboard track 33 may permit actuator 40 to be disposed in a portion of wing 12 that has a greater thickness than more outboard portions of wing 12 housing other components of system 300.

Actuator 40 may be drivingly connected to slat 20A via a mechanical linkage. Actuator 40 may be drivingly connected to both inboard track 33 and outboard track 34 so that both inboard portion 46 and outboard portion 48 of slat 20A may be simultaneously driven by the same actuator 40.

For example, actuator 40 may be drivingly connected to inboard track 33 via inboard bell crank 42 to actuate inboard portion 46 of slat 20A. Inboard bell crank 42 may be configured to convert linear driving movement of actuator 40 along driving direction A into an inboard actuation movement of slat 20A generally along actuation direction B. In other words, inboard bell crank 42 may be used to change motion through an angle. In some embodiments, actuator 40 may be (e.g., directly or indirectly) connected to input arm 50 of inboard bell crank 42. Inboard track 33 may be directly connected to first output arm 52 of inboard bell crank 42, or may be indirectly connected to first output arm 52 of inboard bell crank 42 via link 53. In some embodiments, input arm 50 and first output arm 52 may be substantially perpendicular but other angular spacing may be suitable in some installations.

In some embodiments, inboard bell crank 42 may amplify the linear actuation of actuator 40 to achieve a larger displacement of inboard track 33 relative to the actuation distance generated by actuator 40. The amplification may be achieved by input arm 50 being shorter than first output arm 52. Different lengths of input arm 50 and first output arm 52 may be selected to achieve a desired magnitude of amplification.

Outboard track 34 may also be actuated by actuator 40 via inboard bell crank 42. For example, inboard bell crank 42 may include second output arm 54 that may be used to impart actuation displacement toward outboard bell crank 44 via one or more connecting rods 58, 62. In some embodiments, second output arm 54 of inboard bell crank 42 may be longer than input arm 50 in order to amplify the linear actuation of actuator 40. In another embodiment, first output arm 52 of inboard bell crank 42 and/or second output arm 54 of inboard bell crank 42 may be shorter than input arm 50 in order to reduce the linear actuation of actuator 40. In some embodiments, second output arm 54 and input arm 50 may be diametrically opposed relative to a pivot axis of inboard bell crank 42.

Actuator 40 may be drivingly connected to outboard track 34 via outboard bell crank 44 to actuate outboard portion 48 of slat 20A. Outboard bell crank 44 may be configured to convert an actuation of connecting rod(s) 58, 62 along a longitudinal axis of connecting rod(s) 58, 62 into actuation movement of slat 20A generally along actuation direction B. In other words, outboard bell crank 44 may be used to change motion through an angle. In some embodiments, second connecting rod 62 may be (e.g., directly or indirectly) connected to input arm 56 of outboard bell crank 44. Outboard track 34 may be directly connected to output arm 64 of outboard bell crank 44, or may be indirectly connected to output arm 64 of outboard bell crank 44 via link 65. In some embodiments, input arm 56 and output arm 64 of outboard bell crank 44 may be substantially perpendicular but other angular spacings may be suitable in some installations.

In some embodiments, outboard bell crank 44 may amplify the linear actuation movement of second connecting rod 62 to achieve a larger displacement of outboard track 34 relative to the actuation distance of second connecting rod 62. The amplification may be achieved by input arm 56 being shorter than output arm 64. Different lengths of input arm 56 and output arm 64 may be selected to achieve a desired magnitude of amplification. In some embodiments, input arm 56 and output arm 64 may be substantially perpendicular. In some embodiments, the amplification provided by inboard bell crank 42 and by outboard bell crank 44 may promote compactness of system 300. For example, system 300 may facilitate the ability to achieve a larger deployment (e.g., angle) of slat 20A for a smaller driving movement of actuator 40.

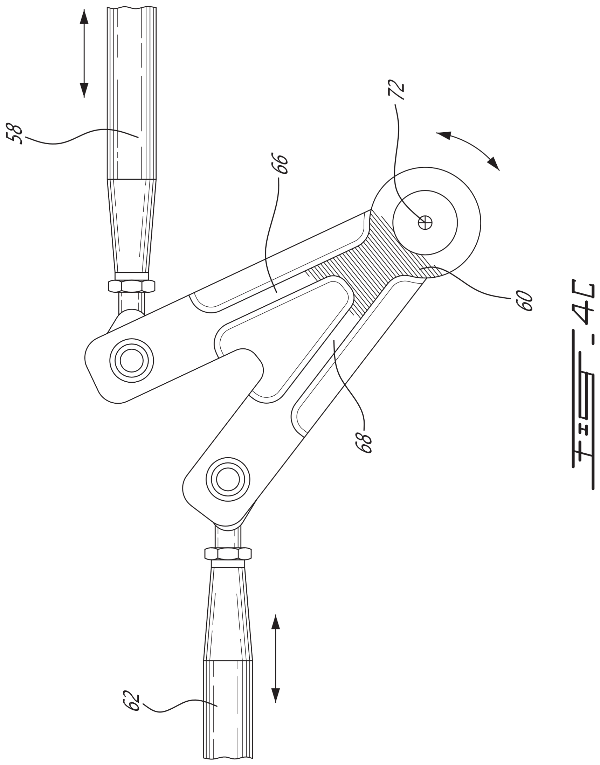

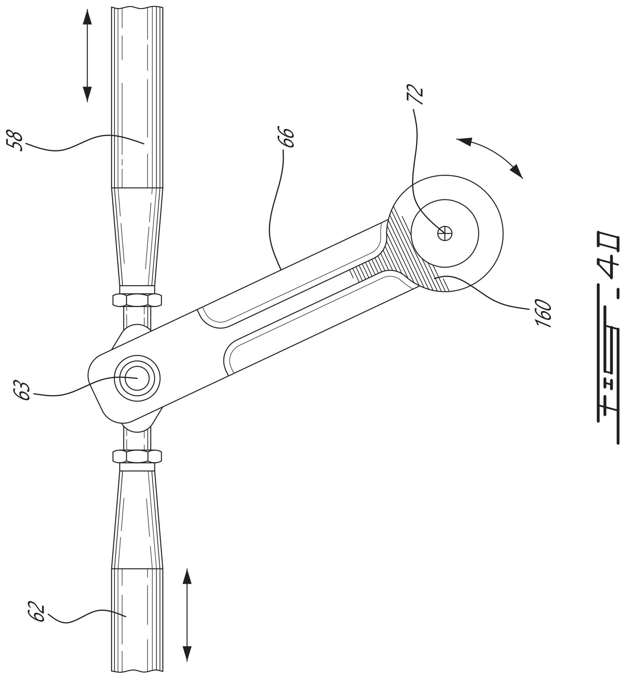

In some embodiments, inboard bell crank 42 and outboard bell crank 44 may be drivingly connected together via a single connecting rod interconnecting second output arm 54 of inboard bell crank 42 and input arm 56 of outboard bell crank 44. However, in some embodiments, second output arm 54 of inboard bell crank 42 and input arm 56 of outboard bell crank 44 may be drivingly interconnected via first connecting rod 58, two-arm idler 60 and second connecting rod 62. Idler 60 may be operatively disposed between first connecting rod 58 and second connecting rod 62. Idler 60 may be configured as a bell crank without amplification in some embodiments. For example, idler 60 may include input arm 66 connected to first connecting rod 58, and output arm 68 connected to second connecting rod 62. In some embodiments, input arm 66 and output arm 68 of idler 60 may have substantially the same length relative to a pivot axis 72 (shown in FIG. 4C) of idler 60. In some embodiments, input arm 66 and output arm 68 of idler 60 may disposed at an acute angle to each other relative to pivot axis 72 of idler 60. In some embodiments, one-arm idler 160 (shown in FIG. 4D) may instead be used in system 300.

The use of two connecting rods (e.g., first connecting rod 58 and second connecting rod 62) and idler 60 therebetween as opposed to a single longer and relatively rigid connecting rod to cover the distance between inboard bell crank 42 and outboard bell crank 44 may be beneficial in some installations during bending of wing 12 due to normal flight loads and/or during turbulence. For example, compared to a single longer connecting rod, the use of first connecting rod 58, second connecting rod 62 and idler 60 may accommodate more bending of wing 12 and be less susceptible to inducing parasitic displacement of inboard track 33 and/or of outboard track 34 due to the deflection of components of system 300 caused by the bending of wing 12.

The components of system 300 may lie relatively flat when installed inside of wing 12 and may therefore have a relatively low profile. The configuration of the mechanism of system 300 and the associated driving and actuation directions may permit the installation of system 300 on a wing having a relatively small thickness and also permit the components of system 300, other than slat 20A, to be entirely contained within the internal cavity defined by skin 22 of wing 12. In other words, the components of system 300, other than slat 20A, may be entirely contained within the outer mould line of wing 12. For example, inboard track 33, outboard track 34 and connecting rod(s) 58, 62 may be disposed inside the internal cavity of wing 12. In some embodiments, system 300 may not require the use of fairings protruding from wing 12 to house one or more components of system 300. In other words, wing 12 may be devoid of a fairing housing part of system 300.

In some embodiments, system 300 may be used with a most outboard slat 20A which is the farthest away from centerline CL and which may be movably attached to a portion of wing 12 that has a relatively small thickness (i.e., thin cross-sectional profiles). In embodiments where aircraft 100 includes a plurality of slats 20A, the slat 20A of system 300 may be located outboard of one or more other slats 20A of the same wing 12. In such embodiments, actuator 40 may also be disposed outboard of one or more other slats 20A. Alternatively, slat 20A of system 300 may be located inboard of one or more other slats 20A of the same wing 12. Components of system 300 may be made from suitable (e.g., metallic, composite) structural material(s) suitable for aircraft applications such as deployment mechanisms for flight control surfaces.

FIG. 3A shows driving direction A of actuator 40 of system 300 relative to actuation direction B of slat 20A of aircraft 100 as projected in a horizontal plane as viewed in FIG. 3A. In some embodiments, driving direction A of actuator 40 may be substantially linear. Driving direction A may be principally perpendicular to actuation direction B of slat 20A. For example, in some embodiments, driving direction A of the actuation movement of actuator 40 may have an orientation that is closer to being perpendicular to actuation direction B of slat 20A than to being parallel to actuation direction B of slat 20A. In some embodiments, driving direction A of actuator 40 may be oriented closer to a lateral axis transverse to centerline CL than to centerline CL. In some embodiments, driving direction A of actuator 40 may be principally along a sweep angle of wing 12 relative to the lateral axis. In some embodiments, driving direction A of actuator 40 may be substantially parallel to the sweep angle of wing 12. In some embodiments, driving direction A of actuator 40 may be substantially parallel to a leading edge of wing 12.

FIG. 3B is a schematic top plan view of another exemplary high-lift system 1300 (referred herein as "system 1300") of aircraft 100. System 1300 may have a similar principle of operation as system 300 where actuation movement by actuator 40 along driving direction A may cause actuation movement of slat 20A along actuation direction B. System 1300 may include elements of system 300 previously described above and like elements are identified using like reference numerals. In some embodiments, system 1300 may be substantially identical to system 300 except that at least part of actuator 40 may be disposed outboard of outboard track 34. In some embodiments, actuator 40 may be entirely disposed outboard of outboard track 34. In some embodiments, at least part of actuator 40 may be disposed inboard of outboard end 49 of slat 20A. In some embodiments, at least part of actuator 40 may be disposed outboard of outboard end 49 of slat 20A. The location of actuator 40 outboard of outboard track 34 may be suitable for high-lift surfaces located proximal to fuselage 14 (i.e., closer to wing root 30) due to potential space constraints between the inboard end 41 of slat 20A and fuselage 14. In other embodiments, at least part of actuator 40 may be disposed between inboard track 33 and outboard track 34.

Actuator 40 may be drivingly connected to outboard track 34 via input arm 50 of outboard bell crank 44 to actuate outboard portion 48 of slat 20A. In this configuration, inboard bell crank 42 may not require input arm 50. Inboard bell crank 42 may drivingly connect actuator 40 to inboard track 33 and inboard portion 46 of slat 20A via one or more connecting rods 58, 62, outboard bell crank 44 and optionally idler 60. In another embodiment, the actuator 40 may be disposed between inboard track 33 and outboard track 34, as mentioned previously, and drivingly connected to the idler 60 to actuate slat 20A through one or more connecting rods 58, 62.

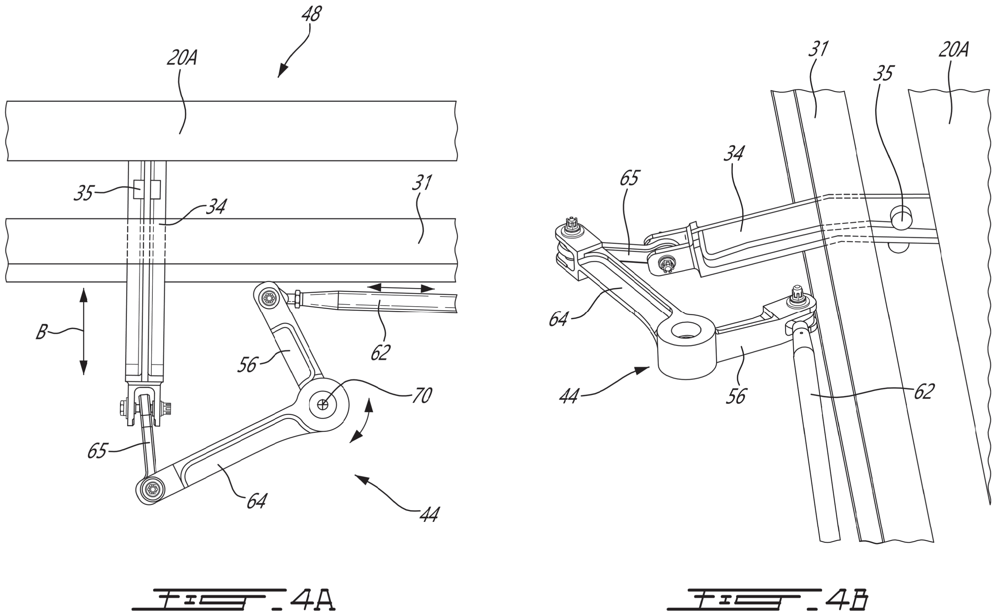

FIGS. 4A and 4B show part of system 300 including outboard bell crank 44 installed within wing 12 for actuating outboard track 34 connected to slat 20A. FIG. 4A is an enlarged top plan view showing outboard bell crank 44 and outboard track 34. FIG. 4B is an enlarged perspective view showing outboard bell crank 44 and outboard track 34. Inboard bell crank 42 may have a similar principle of operation as outboard bell crank 44 therefore the explanation of outboard bell crank 44 may also be applicable to inboard bell crank 42.

Outboard bell crank 44 may be actuated by second connecting rod 62 connected to input arm 56 and caused to rotate about pivot axis 70 (shown in FIG. 4A). Outboard bell crank 44 may be pivotally connected to internal structure 31 at pivot axis 70. The rotation of outboard bell crank 44 may cause rotation of output arm 64. The rotation of output arm 64 may in turn cause displacement (e.g., translation) of outboard track 34 and of slat 20A via link 65. Since output arm 64 is longer than input arm 56, outboard bell crank 44 may also perform an amplification function.

One or more pivot connections between actuator 40 and inboard track 33 and one or more pivot connections between actuator 40 and outboard track 34 may include spherical bearings. The spherical bearings may permit rotation about a central point in two orthogonal directions. The spherical bearings may also accommodate out-of-plane displacement of components during operation and/or during bending of wing 22. The spherical bearings may help system 300 accommodate misalignment of the components due to bending of wings 12 for example.

FIG. 4C is an enlarged top plan view of idler 60 operatively disposed between first connecting rod 58 and second connecting rod 62. In some embodiments, the position of idler 60 may optionally be selected so that first connecting rod 58 and second connecting rod 62 may be of the same length or close in length. Idler 60 may include input arm 66 connected to an end of first connecting rod 58 via a spherical bearing, and output arm 68 connected to an end of second connecting rod 62 via another spherical bearing. The presence of idler 60 may permit relative changes in direction of first connecting rod 58 and second connecting rod 62 during bending of wing 12. In some embodiments, input arm 66 and output arm 68 of idler 60 may have substantially the same length relative to a pivot axis 72 (shown in FIG. 4C) of idler 60. In some embodiments, input arm 66 and output arm 68 of idler 60 may have different lengths so as to provide amplification and/or reduction in the transmission of motion from first connecting rod 58 to second connecting rod 62. In some embodiments, input arm 66 and output arm 68 of idler 60 may disposed at an acute angle to each other relative to pivot axis 72 of idler 60. Idler 60 may be pivotally connected to internal structure 31 at pivot axis 72.

FIG. 4D is an enlarged top plan view of another idler 160 operatively disposed between first connecting rod 58 and second connecting rod 62. As an alternative to idler 60, idler 160 may have only one arm 66 having connection point 63. The single arm 66 may be connected to ends of both connecting rods 58, 62 at the connection point 63 via a spherical bearing. Connection point 63 may be spaced apart from pivot axis 72. Idler 160 may be pivotally connected to internal structure 31 at pivot axis 72.

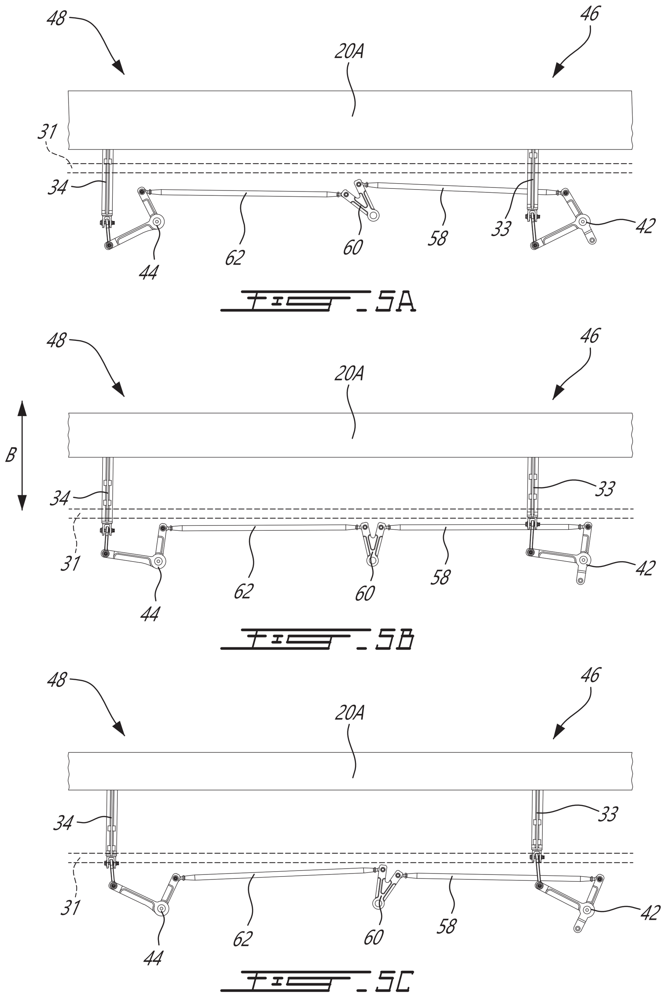

FIGS. 5A-5C are top plan views of part of system 300 showing slat 20A in a retracted (i.e., stowed) position, in an intermediate position and in a deployed (i.e., extended) position respectively. Slat 20A may be driven toward the deployed position by actuator 40 producing a linear driving movement along driving direction A. The actuation of actuator 40 will cause the rotation of inboard bell crank 42. The rotation of inboard bell crank 42 will push inboard track 33 outwardly (e.g., forwardly and optionally downwardly) from structure 31 and drive inboard portion 46 of slat 20A toward its deployed position. The rotation of inboard bell crank 42 will simultaneously also actuate first connecting rod 58, idler 60 and second connecting rod 62 and thereby cause outboard bell crank 44 to rotate as well. The rotation of outboard bell crank 44 may push outboard track 34 outwardly (e.g., forwardly and optionally downwardly) from structure 31 and drive outboard portion 48 of slat 20A toward its deployed position.

The movement of slat 20A toward its fully deployed position may progressively increase the amount of lift that is being generated by wing 12 when aircraft 100 is in transit. From the deployed position of slat 20A, a diving movement of actuator 40 in the reverse direction may cause inboard bell crank 42 and outboard bell crank 44 to rotate in the opposite direction and thereby cause slat 20A to move toward its retracted position.

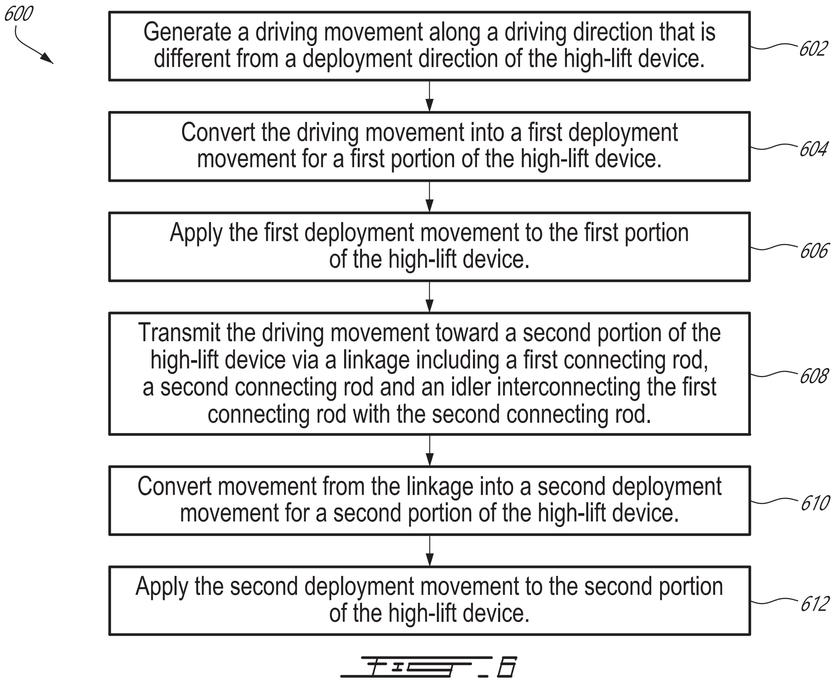

FIG. 6 is a flow diagram of method 600 of deploying a high-lift device of wing 12 of aircraft 100. Method 600 may be used to deploy (i.e., extend) slat 20A, trailing edge flap 20B and/or another flight control surface of aircraft 100. Method 600 may be used to cause deployment of slat 20A as illustrated in FIGS. 5A-5C. Method 600 may be initiated by a command input into a flight control system of aircraft 100 by a pilot of aircraft 100 or by an auto-flight system of aircraft 100. Method 600 may be performed using system 300 or system 1300, and components of system(s) 300, 1300 may be incorporated into method 600. Method 600 may incorporate other actions or components disclosed herein. In various embodiments, method 600 may include:
generating a driving movement along driving direction A that is different from deployment direction B of a high-lift device (e.g., slat 20A or trailing edge flap 20B) (block 602);
converting the driving movement into a first deployment movement for a first portion 46 or 48 of the high-lift device relative to centerline CL of aircraft 100 (block 604);
applying the first deployment movement to the first portion 46 or 48 of the high-lift device (block 606);
transmitting the driving movement toward a second portion of the high-lift device via a linkage including first connecting rod 58, second connecting rod 62 and idler 60 interconnecting first connecting rod 58 with second connecting rod 62 (block 608);
converting movement from the linkage into a second deployment movement for the second portion 46 or 48 of the high-lift device relative to centerline CL of aircraft 100 (block 610); and
applying the second deployment movement to the second portion 46 or 48 of the high-lift device (block 612).

In some embodiments, the high lift surface may be slat 20A located along the wing 12 of aircraft 100. In some embodiments, slat 20A may be a most outboard slat 20A of wing 12 that includes a plurality of slats 20A. For example, the most outboard slat 20A may be closer to wing tip 32 than to wing root 30. In some embodiments, slat 20A may be a most inboard slat 20A of wing 12 that includes a plurality of slats 20A. In some embodiments, the high-lift surface may be trailing edge flap 20B or other flight control surface.

The driving movement may be generated by actuator 40 located inside the internal cavity of wing 12 defined by skin 22 (e.g., upper and lower wing skins) of wing 12. Actuator 40 may be located at a position inboard of inboard track 33 or outboard of outboard track 34. Actuator 40 may be the sole actuator for driving both inboard portion 46 and outboard portion 48 of the high-lift surface.

As can be seen therefore, the examples described above and illustrated are intended to be exemplary only. The scope is indicated by the appended claims.

## Claims

1. A high-lift system for a wing of an aircraft, the high-lift system comprising:
a high-lift device movable between a retracted position and a deployed position, the high-lift device having an inboard portion and an outboard portion, the inboard portion being inboard of the outboard portion relative to a centerline of the aircraft;
an inboard track configured to guide a movement of the inboard portion of the high-lift device;
an outboard track configured to guide a movement of the outboard portion of the high-lift device, the inboard track being disposed inboard of the outboard track;
an actuator drivingly connected to the high-lift device to drive the high-lift device between the retracted position and the deployed position, the actuator being disposed either inboard of the inboard track or outboard of the outboard track;
an inboard bell crank drivingly connecting the actuator to the inboard portion of the high-lift device;
an outboard bell crank drivingly connecting the actuator to the outboard portion of the high-lift device; and
a connecting rod drivingly connecting the inboard bell crank to the outboard bell crank so that:
when the actuator is disposed inboard of the inboard track, the outboard bell crank is drivingly connecting the actuator to the outboard portion of the high-lift device via the connecting rod and the inboard bell crank; and
when the actuator is disposed outboard of the outboard track, the inboard bell crank is drivingly connecting the actuator to the inboard portion of the high-lift device via the connecting rod and the outboard bell crank.

2. The high-lift system as defined in claim 1, wherein the actuator is disposed outboard of the outboard track; or
wherein the actuator is disposed inboard of the inboard track.

3. The high-lift system as defined in any of claims 1 to 2, wherein:
the connecting rod is a first connecting rod that is part of a linkage between the inboard bell crank and the outboard bell crank; and
the linkage includes a second connecting rod and an idler interconnecting the first connecting rod with the second connecting rod.

4. The high-lift system as defined in any one of claims 1 to 3, wherein the high-lift device is a leading edge slat.

5. The high-lift system as defined in any one of claims 1 to 4, wherein:
the actuator is disposed inboard of the inboard track; and
the inboard bell crank is configured to amplify a driving movement of the actuator; or
wherein:
the actuator is disposed outboard of the outboard track; and
the outboard bell crank is configured to amplify a driving movement of the actuator.

6. The high-lift system as defined in any one of claims 1 to 4, wherein:
the actuator is operable to generate a linear driving movement; and
an orientation of the linear driving movement is:
perpendicular to an actuation direction of the high-lift device; or
closer to being perpendicular to the actuation direction of the high-lift device than to being parallel to the actuation direction of the high-lift device.

7. The high-lift system as defined in claim 6, wherein:
the actuator is disposed inboard of the inboard track; and
the inboard bell crank is configured to redirect the linear driving movement of the actuator toward the actuation direction of the high-lift device; or
wherein:
the actuator is disposed outboard of the outboard track; and
the outboard bell crank is configured to redirect the linear driving movement of the actuator toward the actuation direction of the high-lift device; or
wherein:
the actuator is disposed inboard of the inboard track; and
the outboard bell crank is configured to amplify an actuation movement of the connecting rod; or
wherein:
the actuator is disposed outboard of the outboard track; and
the inboard bell crank is configured to amplify an actuation movement of the connecting rod.

8. The high-lift system as defined in any one of claims 1 to 7, wherein the high-lift system is devoid of another actuator drivingly connected to the high-lift device to drive the high-lift device between the retracted position and the deployed position.

9. An aircraft including the high-lift system as defined in any one of claims 1 to 8.

10. A wing of a fixed-wing aircraft, the wing comprising:
a structure;
a skin mounted to the structure and defining an internal cavity of the wing;
a high-lift device movably mounted to the structure and being deployable to increase an amount of lift produced by the wing, the high-lift device having an inboard portion and an outboard portion relative to a centerline of the fixed-wing aircraft;
an inboard track configured to guide the inboard portion of the high-lift device during a deployment of the high-lift device;
an outboard track configured to guide the outboard portion of the high-lift device during the deployment of the high-lift device;
an actuator drivingly connected to the high-lift device to drive the deployment of the high-lift device, the actuator being disposed inside the internal cavity of the wing;
an inboard bell crank drivingly connecting the actuator to the inboard portion of the high-lift device;
an outboard bell crank drivingly connecting the actuator to the outboard portion of the high-lift device; and
a linkage drivingly connecting the inboard bell crank to the outboard bell crank, the linkage including a first connecting rod, a second connecting rod and an idler interconnecting the first connecting rod with the second connecting rod.

11. The wing as defined in claim 10, wherein the inboard track, the outboard track, the first connecting rod and the second connecting rod are disposed inside the internal cavity of the wing.

12. The wing as defined in claim 11 or claim 12, wherein:
the high-lift device is an outboard high-lift device;
the wing includes an inboard high-lift device movably mounted to the structure and being deployable to increase the amount of lift produced by the wing; and
the outboard high-lift device is disposed outboard of the inboard high-lift device along the wing.

13. The wing as defined in any one of claims 10 to 12, wherein at least part of the actuator is disposed inboard of the inboard track; or
wherein at least part of the actuator is disposed outboard of the outboard track.

14. The wing as defined in any one of claims 10 to 13, wherein the high-lift device is a leading edge slat.

15. The wing as defined in any one of claims 10 to 14, wherein the inboard track and the outboard track are movable relative to the structure during the deployment of the high-lift device.

16. The wing as defined in claim any of claims 1 to 15, wherein:
the high-lift device is a leading edge slat;
the actuator is operable to generate a linear driving movement;
an orientation of the linear driving movement is:
perpendicular to an actuation direction of the leading edge slat; or
closer to being perpendicular to the actuation direction of the leading edge slat than to being parallel to the actuation direction of the leading edge slat;
the actuator is disposed inboard of the inboard track;
the inboard bell crank is configured to amplify the linear driving movement of the actuator; and
the outboard bell crank is configured to amplify a driving movement of the second connecting rod.

17. A method of deploying a high-lift device of a wing of an aircraft, the method comprising:
generating a driving movement along a driving direction that is different from a deployment direction of the high-lift device;
converting the driving movement into a first deployment movement for a first portion of the high-lift device;
applying the first deployment movement to the first portion of the high-lift device;
transmitting the driving movement toward a second portion of the high-lift device via a linkage including a first connecting rod, a second connecting rod and an idler interconnecting the first connecting rod with the second connecting rod;
converting movement from the linkage into a second deployment movement for a second portion of the high-lift device; and
applying the second deployment movement to the second portion of the high-lift device.

18. The method as defined in claim 17, wherein:
the high-lift device is a leading edge slat; and
the driving movement is generated by a linear actuator disposed inside an internal cavity of the wing.
